# EUROPÄISCHE PATENTSCHRIFT

(11) **EP 2 760 075 B1**
(45) Veröffentlichungstag und Bekanntmachung des Hinweises auf die Patenterteilung: **19.06.2019**
(21) Anmeldenummer: 13152732.7
(22) Anmeldetag: 25.01.2013
(51) Int. Cl.: H01M 10/6568, H01M 2/36, H01M 2/10, H01M 10/625

(54) **BATTERIESYSTEM MIT GEHÄUSE**
BATTERY SYSTEM WITH HOUSING
SYSTÈME DE BATTERIE AVEC BOÎTIER

(43) Veröffentlichungstag der Anmeldung: 30.07.2014
(73) Patentinhaber: Samsung SDI Co., Ltd., Yongin-si, Gyeonggi-do (KR)
(72) Erfinder: Steiner, Franz, 8020 Graz (AT); Trathnigg, Thomas, 8010 Graz (AT); Wünsche, Ralph, 8010 Graz (AT)
(74) Vertreter: Gulde & Partner

(56) Entgegenhaltungen:
- EP-A1- 2 368 740
- EP-A1- 2 533 346
- DE-A1-102009 037 181
- US-A- 1 290 487

## Beschreibung

### Gebiet der Erfindung

Die vorliegende Erfindung betrifft ein Batteriesystem für ein Fahrzeug, umfassend ein Gehäuse, eine Vielzahl von in einem Innenraum des Gehäuses angeordneten Zellen, sowie eine darin angeordneten Temperiervorrichtung zum Zu- und/oder Abführen von Wärme von und/oder zu den Zellen mittels eines flüssigen Wärmeträgers.

### Stand der Technik

Derartige Batteriesysteme werden in Hybrid- und/oder ElektroFahrzeugen eingesetzt. Durch den Innenwiderstand der Zellen geben die Zellen bei Stromdurchfluss Wärme ab. Da die Lebensdauer der Zellen mit steigender Temperatur stark abnimmt, ist es üblich die Zellen mittels einer geeigneten Temperiervorrichtung zu kühlen. Weiters ist die Leistungsaufnahme der Zellen bei geringen Temperaturen eingeschränkt, was zu einer langen Ladedauer des Batteriesystems führen kann. Die Temperiervorrichtung ist daher oft auch geeignet Wärme zu den Zellen zuzuführen. Im Fahrzeugbau hat sich der Einsatz von flüssigen Wärmeträgern bewährt, und wird daher in solchen Temperiervorrichtung verwendet.

Eine Leckage des flüssigen Wärmeträgers kann zu Betriebsstörungen innerhalb des Batteriesystems führen, beispielsweise in Form von Korrosion. Ist der Wärmeträger elektrisch leitfähig, so kann eine Leckage auch zu Kurzschlüssen innerhalb des Batteriesystems führen.

Ein Batteriesystem der gattungsgemäßen Art ist aus der Offenlegung FR2968839 A1 bekannt. Darin ist ein Hochvolt-Batteriesystem offenbart, umfassend ein Gehäuse mit darin angeordneten Zellen, und einen ausziehbaren Tank welcher absorbierendes Material enthält. Das Gehäuse weist eine Ablauf-Wand mit einer Öffnung auf, durch die kondensierte Flüssigkeit zu dem ausziehbaren Tank gelangen kann.

Eine derartige Ausführung bringt eine Reihe an Nachteilen mit sich. Um den ausziehbaren Tank auch tatsächlich herausziehen zu können, muss das Batteriesystem eine entsprechende Zugänglichkeit aufweisen. Dabei muss gewährleistet sein, dass der ausziehbare Tank tatsächlich soweit herausziehbar ist, dass das absorbierende Material getauscht werden kann. Der entsprechende Bauraum ist im Fahrzeug freizuhalten. Durch die zwangsläufig verbesserte Zugänglichkeit ist das Batteriegehäuse aber auch exponierter. Dies erhöht das Risiko einer Beschädigung des Batteriesystems bei einem Unfall.

Eine weitere Vorrichtung für ein Batteriesystem zur Ableitung von innerhalb eines Gehäuses angesammelten Kondenswasser ist aus der Offenlegung DE102011085968 A1 bekannt. Darin sind eine Mehrzahl von Wasserableitungsvorrichtungen vorgesehen, die auf ein Steuersignal eines Batterie-Managements-Systems hin betrieben werden um Wasser zwangsweise nach außen abzuleiten. Dabei ist auch ein Wasserstandssensor vorgesehen. Die Wasserableitungsvorrichtungen sind als Wasserpumpen ausgeführt.

Eine derartige Vorrichtung ist insofern nachteilig, als dass die Einsatzbereitschaft von Wasserpumpen über die Lebensdauer des Batteriesystems nicht mit hinreichender Sicherheit zu gewährleisten ist. Durch die Anordnung von mindestens zwei Wasserpumpen wird die Sicherheit zwar verbessert, allerdings steigen durch eine derartige Anordnung auch die Kosten des Batteriesystems erheblich.

Aus der EP 2533346 A1 ist eine Flüssigkeitsabfuhrvorrichtung bekannt, welche insbesondere zur Entfernung von Flüssigkeit aus einer Energiespeichervorrichtung dient, wobei die Flüssigkeitsabfuhrvorrichtung mit der Energiespeichervorrichtung verbindbar ist, wobei die Flüssigkeitsabfuhrvorrichtung mindestens eine Einlassöffnung aufweist, durch die Flüssigkeit aus der Energiespeichervorrichtung in die Flüssigkeitsabfuhrvorrichtung gelangen kann, wobei die Flüssigkeitsabfuhrvorrichtung eine flüssigkeitsabsorbierende Einrichtung enthält, die Flüssigkeit an die Umgebung abgeben kann.

Die EP 2368740 A1 beschreibt weiterhin eine Temperatureinstellungsstruktur mit einem Einlasskanal, um Luft in den Fahrzeuginnenraum zu einem elektrischen Speichermodul zu leiten und eine Flüssigkeit, die in den Einlasskanal gelangt, nach außen zu führen. Eine Bodenfläche des Einlasswegs ist als einfach oder doppelt geneigte Fläche ausgebildet.

### Zusammenfassung der Erfindung

Es ist eine Aufgabe der Erfindung, ein Batteriesystem anzugeben mit einem Gehäuse, einer Vielzahl von in einem Innenraum des Gehäuses angeordneten Zellen, sowie darin angeordneten Temperiervorrichtung zum Zu- und/oder Abführen von Wärme von und/oder zu den Zellen mittels eines flüssigen Wärmeträgers, welches bei kompakten Abmessungen die Betriebssicherheit des Batteriesystems verbessert, ein Ableiten von ausgetretenem Wärmeträger unabhängig von der räumlichen Einbaulage ermöglicht und zugleich einfach und kostengünstig in der Herstellung ist.

Die Lösung der Aufgabe erfolgt durch ein Batteriesystem gemäß dem Anspruch 1.

Weiterbildungen der Erfindung sind in den abhängigen Ansprüchen, der Beschreibung sowie den beigefügten Zeichnungen angegeben.

Beispielsweise wird eine Leckage des Wärmeträges durch die erste Schräge unter Ausnutzung der Schwerkraft zu der ersten Gehäuse-Öffnung geführt, und damit aus dem Batteriegehäuse heraus geleitet. Die Anordnung der ersten Gehäuse-Öffnung im zweiten Gehäuse-Abschnitt des Gehäuses ermöglicht eine kompakte Ausführungsform ohne Tanksysteme oder Abpump-Vorrichtungen. Die zumindest erste Schräge weist bezogen auf eine Bodenfläche bevorzugt einen Winkel zwischen 2° bis 10°, besonders bevorzugt 2° bis 5° auf.

Gemäß einer Ausführungsform der Erfindung ist in einer Einbaulage des Batteriesystems der tiefste Punkt des zweiten Gehäuse-Abschnitts unterhalb des tiefsten Punkts des ersten Gehäuse-Abschnitts angeordnet. Der konkrete Höhenabstand ist anhand der maximal austretenden Wärmeträger-Menge auszulegen. Das entscheidende Kriterium zur Auslegung ist, dass es zu keinem Rückfluss oder Rückstau von Wärmeträger vom zweiten Gehäuse-Abschnitt zum ersten Gehäuse-Abschnitt kommt.

Gemäß einer weiteren Ausgestaltung der Erfindung weist das Gehäuse eine Bodenfläche und vier von der Bodenfläche emporragenden Seitenwände auf, wobei der zweite Gehäuse-Abschnitt zwischen dem ersten Gehäuse-Abschnitt und einer ersten Seitenwand angeordnet ist. Der erste Gehäuse-Abschnitt weist dabei die zumindest erste Schräge auf. Der geringste Abstand zwischen dem erstem Gehäuse-Abschnitt und der ersten Seitenwand beträgt bevorzugt zwischen 0,5 und 4 cm, besonders bevorzugt zwischen 0,5 und 2 cm. Durch diese Ausgestaltung ist der Bauraumbedarf des zweiten Gehäuse-Abschnitts gering.

Erfindungsgemäß weist der erste Gehäuse-Abschnitt eine zweite Schräge auf, durch die austretender Wärmeträger zu einem dritten Gehäuse-Abschnitt leitbar ist, und das Gehäuse weist eine zweite Gehäuse-Öffnung auf, durch die ein Gasaustausch zwischen dem Innenraum und dem Außenraum des Gehäuses ermöglicht ist. Durch diese Anordnung wird die erfindungsgemäße Funktionalität auch bei einer solchen Schieflage des Batteriesystems gewährleistet, die der Wirkung der ersten Schräge entgegenwirkt.

Gemäß einer weiteren Ausgestaltung der Erfindung weist das Gehäuse eine Bodenfläche und vier von der Bodenfläche emporragenden Seitenwände auf, wobei der dritte Gehäuse-Abschnitt zwischen dem ersten Gehäuse-Abschnitt und einer zweiten Seitenwand angeordnet ist. Der erste Gehäuse-Abschnitt weist dabei die erste Schräge und die zweite Schräge auf. Der geringste Abstand zwischen erstem Gehäuse-Abschnitt und der zweiten Seitenwand beträgt bevorzugt zwischen 0,5 und 4 cm, besonders bevorzugt zwischen 0,5 und 2 cm. Durch diese Ausgestaltung ist der Bauraumbedarf des dritten Gehäuse-Abschnitts gering.

Gemäß einer Ausführungsform der Erfindung ist die zweite Seitenwand auf einer der ersten Seitenwand gegenüberliegenden Seite des Gehäuses angeordnet. Durch diese Anordnung ist die Ableitung von ausgetretenem Wärmeträger weitgehend unabhängig von der räumlichen Lage des Batteriesystems.

Vorzugsweise ist die erste und/oder zweite Gehäuse-Öffnung in einer Seitenwand des Gehäuses angeordnet. Dies ist insbesondere für die Befestigung des Batteriesystems im Fahrzeug vorteilhaft, da die Bodenfläche des Gehäuses häufig für die Befestigung des Batteriesystems in der Fahrzeugstruktur verwendet wird. Um das Batteriesystem vor äußeren Einflüssen besser zu schützen ist zudem eine Anordnung eines Schutzblechs unterhalb der Bodenfläche üblich. An der ersten Gehäuse-Öffnung ist zumeist noch ein Leitungsabschnitt zum gezielten Ableiten von Leckage oder Abgasen aus dem Innenraum des Gehäuses vorgesehen. Die Anordnung der ersten Gehäuse-Öffnung in einer Seitenwand erleichtert die Befestigung des Leitungsabschnitts unter den genannten Bauraumbedingungen erheblich.

Gemäß einer weiteren Ausgestaltung der Erfindung sind die erste und zweite Gehäuse-Öffnung in einander gegenüberliegenden Seitenwänden angeordnet. Durch diese Anordnung wird die erfindungsgemäße Funktionalität auch bei einer solchen Schieflage des Batteriesystems gewährleistet, bei der ausgetretener Wärmeträger nicht in Richtung der ersten Gehäuse-Öffnung fließen kann.

Gemäß einer Ausführungsform der Erfindung weist der erste Gehäuse-Abschnitt Aufnahmevorrichtungen auf, die zur Befestigung der Temperiervorrichtung geeignet sind. Die Zellen des Batteriesystems sind gut wärmeleitend an der Temperiervorrichtung befestigt. Die Aufnahmevorrichtungen sind insbesondere dann einfach herzustellen, wenn der erste Gehäuse-Abschnitt im Gießverfahren hergestellt ist. Die Aufnahmevorrichtungen können beispielsweise Gussbutzen sein.

Gemäß einer Ausführungsform der Erfindung ist im zweiten Gehäuse-Abschnitt eine dritte Gehäuse-Öffnung angeordnet, wobei erste Gehäuse-Öffnung und dritte Gehäuse-Öffnung an gegenüberliegenden Enden des Gehäuses angeordnet sind. Zusätzlich kann im dritten Gehäuse-Abschnitt eine vierte Gehäuse-Öffnung angeordnet sein, wobei zweite Gehäuse-Öffnung und vierte Gehäuse-Öffnung an gegenüberliegenden Enden des Gehäuses angeordnet sind. Durch diese Anordnung wird die erfindungsgemäße Funktionalität auch bei einer solchen Schieflage des Batteriesystems gewährleistet, bei der ausgetretener Wärmeträger weder in Richtung der ersten noch der zweiten Gehäuse-Öffnung fließen kann.

Vorzugsweise ist in der ersten und/oder zweiten Gehäuse-Öffnung eine Membran angeordnet, wobei die Membran für den flüssigen Wärmeträger durchlässig ist. Durch die Membran wird gewährleistet, dass kein Staub ins Batteriegehäuse gelangt, ohne dabei einen Durchfluss von Wärmeträger erheblich zu behindern.

Gemäß einer weiteren Ausgestaltung der Erfindung ist in der ersten und/oder zweiten Gehäuse-Öffnung ein Ventil angeordnet, wobei das Ventil einen Schwimmkörper aufweist und dazu eingerichtet ist, bei Beaufschlagung mit flüssigem Wärmeträger von einer Sperr-Stellung in eine Offen-Stellung zu wechseln. Diese Ausgestaltung ist bei Batteriesystemen mit besonders widrigen Umgebungsbedingungen vorteilhaft.

Die Erfindung zeichnet sich insbesondere dadurch aus, dass ausgetretener Wärmeträger ohne die Steuerung oder Aktivierung von Zusatzelementen aus dem Innenraum des Batteriegehäuse abgeleitet wird. Dies erhöht die Eigensicherheit des Batteriesystems, da ansonsten erforderliche Zusatzelemente regelmäßig auf ihre Funktionalität hin überprüft werden müssten. Gleichzeitig erhöht sich der Bauraumbedarf des Batteriesystems nur geringfügig. Eine verbesserte Zugänglichkeit, wie sie bei Lösungen mit Tanksystemen nötig ist, ist nicht erforderlich.

Die Erfindung ist nicht darauf beschränkt, dass erste und zweite Schräge sowie zweiter und dritter Gehäuse-Abschnitt in einer Einbaulage des Batteriesystems an der Unterseite des Batteriesystems angeordnet sind. Vielmehr ist es erfindungsgemäß, Ausgestaltung des Gehäuses ganz oder nur teilweise an der Oberseite des Batteriesystems ebenfalls vorzusehen. Es ist eine dritte und vierte Gehäuse-Öffnung an der Oberseite des Batteriesystems angeordnet. Eine Deckfläche, die der Bodenfläche gegenüberliegt, weist eine dritte und vierte Schräge auf, die ausgetretenen Wärmeträger bei entsprechender räumlicher Lage zu einem vierten und fünften Gehäuse-Abschnitt leiten. Das Gehäuse besteht aus einer oberen Hälfte und einer unteren Hälfte, die identisch aufgebaut sind.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer ersten nicht erfindungsgemäßen Ausführungsform des Batteriesystems
- Fig. 2: ist eine Schnittansicht einer zweiten nicht erfindungsgemäßen Ausführungsform des Batteriesystems
- Fig. 3: ist eine Schnittansicht einer dritten nicht erfindungsgemäßen Ausführungsform des Batteriesystems
- Fig. 4: ist eine Schnittansicht einer vierten nicht erfindungsgemäßen Ausführungsform des Batteriesystems
- Fig. 5: ist eine Schnittansicht in einer Draufsicht der vierten nicht erfindungsgemäßen Ausführungsform des Batteriesystems
- Fig. 6: ist eine Schnittansicht in einer Draufsicht einer fünften nicht erfindungsgemäßen Ausführungsform des Batteriesystems
- Fig. 7: ist eine Schnittansicht einer Ausführungsform des erfindungsgemäßen Batteriesystems

### Detaillierte Beschreibung der Erfindung

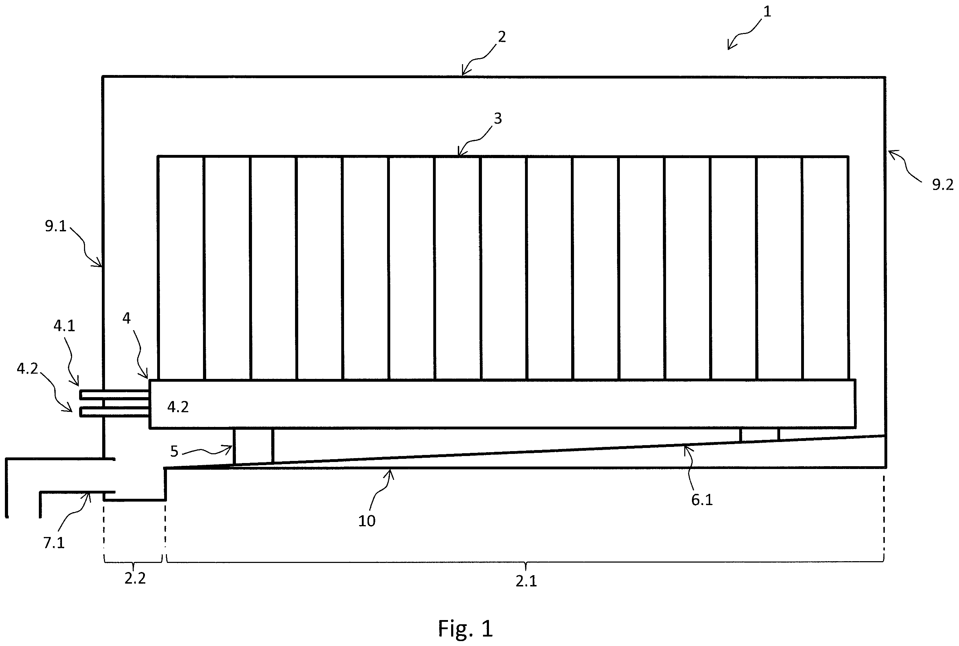

In der Fig. 1 ist eine Schnittansicht einer ersten nicht erfindungsgemäßen Ausführungsform dargestellt. Ein Batteriesystem 1 weist ein Gehäuse 2 mit einer Vielzahl von im Innenraum des Gehäuses 2 angeordneten Zellen 3 auf. Ein Kühlkörper 4 dient als Temperiervorrichtung zum Zu- und/oder Abführen von Wärme von und/oder zu den Zellen 3 mittels eines flüssigen Wärmeträgers. Der Kühlkörper 4 weist einen Einlass 4.1 sowie einen Auslass 4.2 auf. Durch Einlass 4.1 kann Wärmeträger durch den Kühlkörper 4 strömen und am Auslass 4.2 wieder austreten. Die dabei aufgenommene oder abgegebene Wärme wird einem externen, hier nicht dargestellten Wärmetauscher zugeführt. Der Kühlkörper 4 ist mittels Aufnahmevorrichtungen 5 am Gehäuse 2 befestigt. Das Gehäuse 2 weist einen ersten Gehäuse-Abschnitt 2.1 mit einer ersten Schräge 6.1 auf. Bezogen auf eine Bodenfläche 10 weist die Schräge einen Winkel zwischen 2° und 10° auf. An den ersten Gehäuse-Abschnitt 2.1 schließt ein zweiter Gehäuse-Abschnitt 2.2 an. Dieser ist so angeordnet, dass austretender Wärmeträger durch die erste Schräge 6.1 vom ersten Gehäuse-Abschnitts 2.1 zum zweiten Gehäuse-Abschnitt 2.2 abgeleitet wird. Der tiefste Punkt des zweiten Gehäuse-Abschnitts 2.2 liegt dabei in Einbaulage des Batteriesystems 1 unterhalb des tiefsten Punkts des ersten Gehäuse-Abschnitts 2.1. Im zweiten Gehäuse-Abschnitt 2.2 ist eine erste Gehäuse-Öffnung 7.1 vorgesehen, durch die ein Gasaustausch zwischen dem Innenraum und dem Außenraum des Gehäuses 2 ermöglicht ist. Das Gehäuse 2 weist vier von der Bodenfläche emporragende Seitenflächen auf. Der zweite Gehäuse-Abschnitt 2.2 ist dabei zwischen dem ersten Gehäuse-Abschnitt 2.1 und einer ersten Seitenwand 9.1 angeordnet. Ein zweite Seitenwand 9.2 ist der ersten Seitenwand 9.1 gegenüberliegend angeordnet.

Das Batteriesystem 1 weist eine bevorzugt Einbaulage auf, in der die Bodenfläche 10 nach unten weist. Dies gilt sinngemäß für alle Ausführungsformen.

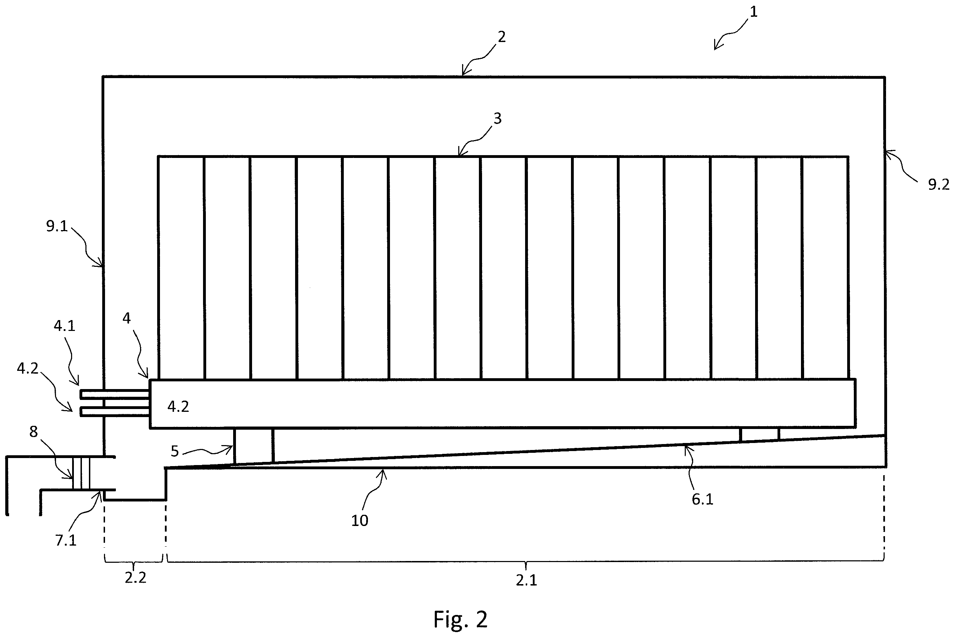

In der Fig. 2 ist eine Schnittansicht einer zweiten nicht erfindungsgemäßen Ausführungsform dargestellt. Im Vergleich zu ersten Ausführungsform ist in der ersten Gehäuse-Öffnung 7.1 eine Membran 8 angeordnet. Die Membran 8 ist dazu eingerichtet den Eintritt von Staub in den Innenraum des Batteriegehäuses 2 zu verhindern, bzw. zu reduzieren. Für den Wärmeträger ist die Membran 8 allerdings durchlässig.

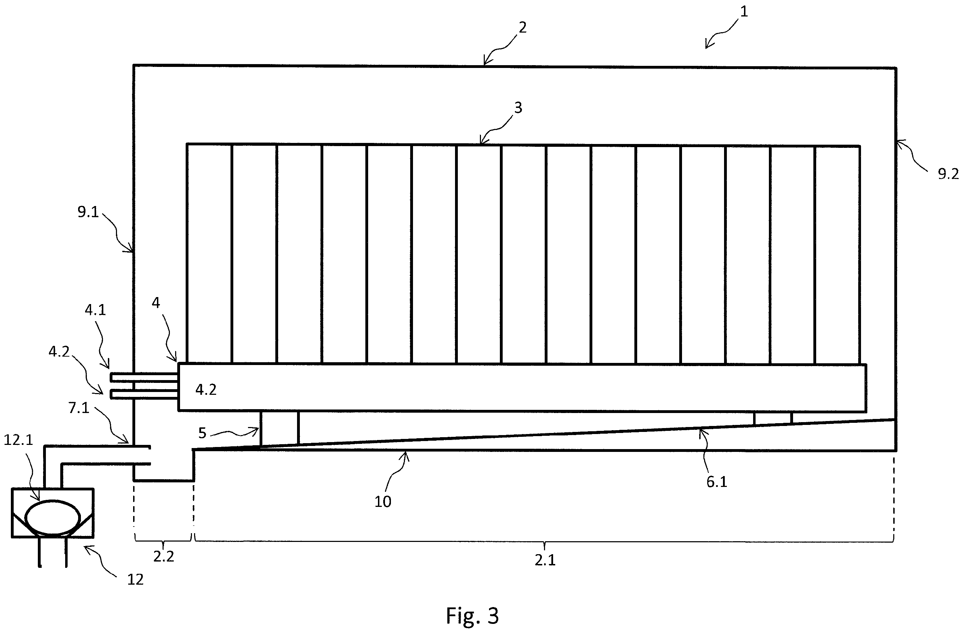

In der Fig. 3 ist eine Schnittansicht einer dritten nicht erfindungsgemäßen Ausführungsform dargestellt. Anstelle dem Membran 8 ist in der ersten Gehäuse-Öffnung ein Ventil 12 angeordnet. Das Ventil 12 weist einen Schwimmkörper 12.1 auf. Wird durch die erste Gehäuse-Öffnung 7.1 ausgetretener Wärmeträger abgeleitet, so hebt sich der Schwimmkörper 12.1. Das Ventil 12 wechselt dabei von einer Sperr-Stellung in eine Offen-Stellung, wodurch der ausgetretene Wärmeträger abgeleitet werden kann.

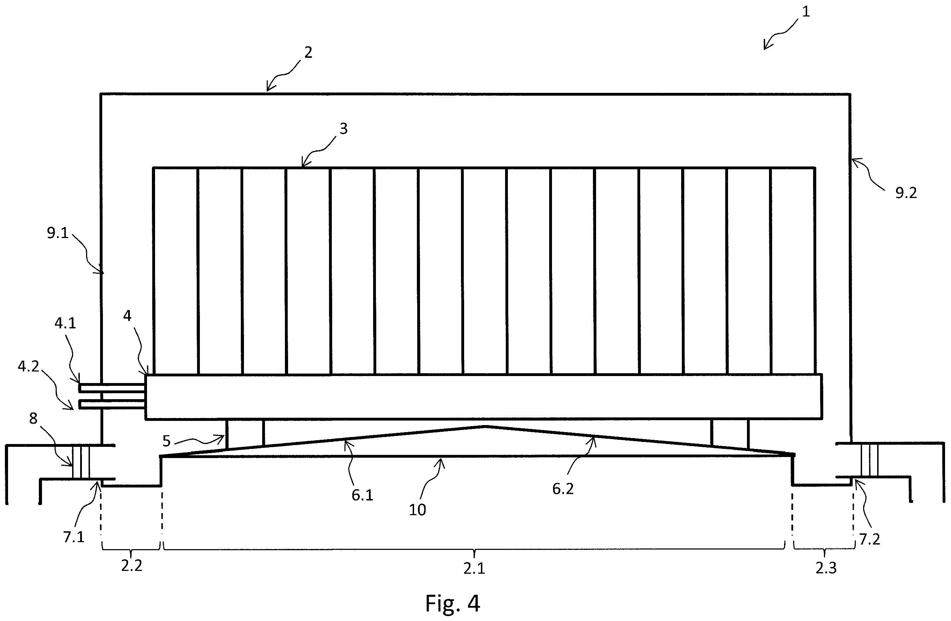

In der Fig. 4 ist eine Schnittansicht einer vierten nicht erfindungsgemäßen Ausführungsform dargestellt. Der erste Gehäuse-Abschnitt 2.1 weist dabei neben der ersten Schräge 6.1 eine zweite Schräge 6.2 auf. Zwischen dem ersten Gehäuse-Abschnitt 2.1 und der zweiten Seitenwand 9.2 ist ein dritter Gehäuse-Abschnitt 2.3 angeordnet. Eine zweite Gehäuse-Öffnung 7.2 ist im dritten Gehäuse-Abschnitt angeordnet. Sowohl in der ersten Gehäuse-Öffnung 7.1 als auch in der zweiten Gehäuse-Öffnung 7.2 ist jeweils eine Membran 8 angeordnet. Anstelle der Membran 8 könnte in den beiden Gehäuse-Öffnungen 7.1 und 7.2 auch je ein Ventil 11 angeordnet sein.

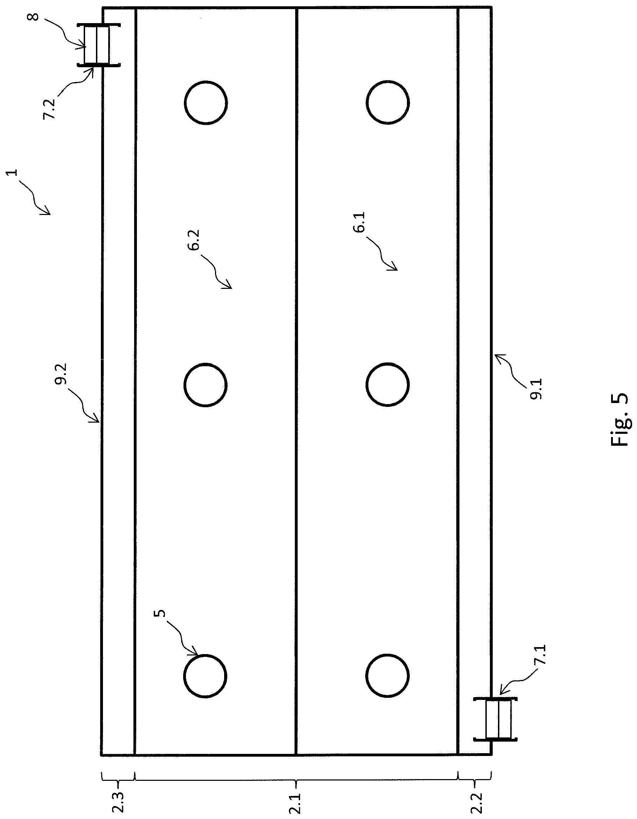

Fig. 5 zeigt eine Schnittansicht in einer Draufsicht der vierten nicht erfindungsgemäßen Ausführungsform. Die erste Gehäuse-Öffnung 7.1 ist dabei an einem ersten Ende des zweiten Gehäuse-Abschnitts 2.2 angeordnet, die zweite Gehäuse-Öffnung 7.2 ist an einem zweiten Ende des dritten Gehäuse-Abschnitts 2.3 angeordnet. Das zweite Ende des dritten Gehäuse-Abschnitts 2.3 und das erste Ende des zweiten Gehäuse-Abschnitts 2.2 sind dabei an gegenüberliegenden Enden des Gehäuses 2 angeordnet. In der ersten und zweiten Gehäuse-Öffnung 7.1 und 7.2 ist jeweils eine Membran 8 angeordnet.

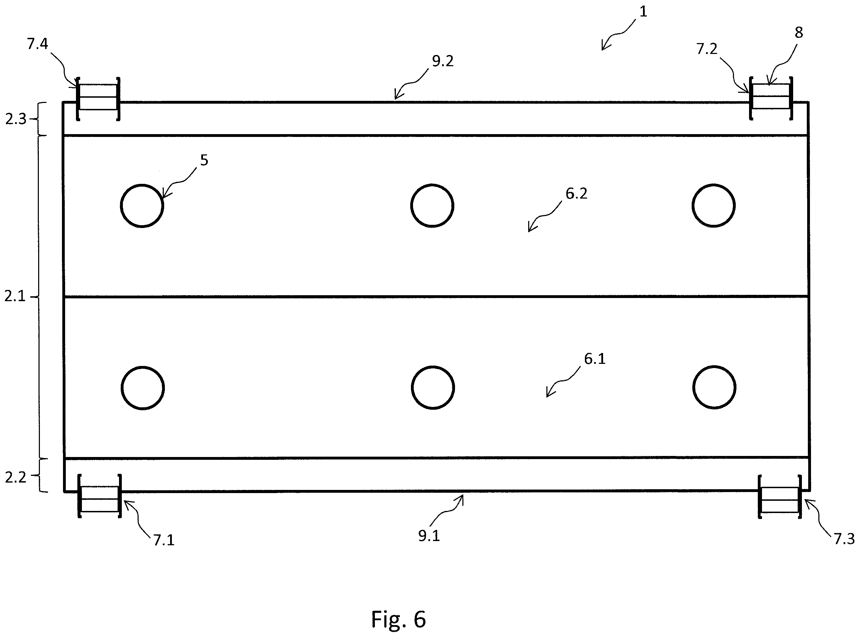

Fig. 6 zeigt eine Schnittansicht in einer Draufsicht einer fünften nicht erfindungsgemäßen Ausführungsform. Darin ist an einem zweiten Ende des zweites Gehäuse-Abschnitts 2.2 eine dritte Gehäuse-Öffnung 7.3 angeordnet, und am ersten Ende des dritten Gehäuse-Abschnitts 2.3 eine vierte Gehäuse-Öffnung 7.4. Das zweite Ende des zweiten Gehäuse-Abschnitts 2.2 und das erste Ende des dritten Gehäuse-Abschnitts 2.3 sind dabei an gegenüberliegenden Enden des Gehäuses 2 angeordnet.

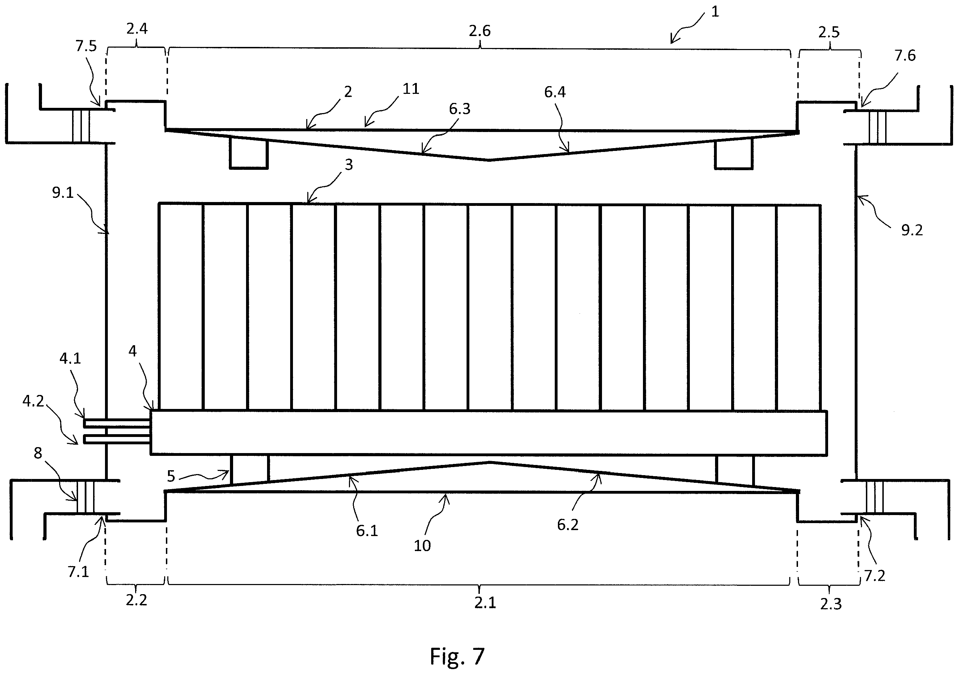

Fig. 7 zeigt eine Schnittansicht der erfindungsgemäßen Ausführungsform. Darin ist an einer Deckfläche 11 des Gehäuses 2 ein sechster Gehäuse-Abschnitt 2.6 mit einer dritten Schräge 6.3 und eine vierten Schräge 6.4 angeordnet. Die Deckfläche 11 ist an einer der Bodenfläche 10 gegenüberliegenden Seite des Gehäuses 2 angeordnet. Zwischen dem sechsten Gehäuse-Abschnitt 2.6 und der ersten Seitenwand 9.1 ist ein vierter Gehäuse-Abschnitt 2.4 angeordnet. In einer Einbaulage des Batteriesystems liegt der höchste Punkt des vierten und fünften Gehäuseabschnitt 2.4 und 2.5 höher als der höchste Punkt des sechsten Gehäuse-Abschnitts 2.6. Im vierten Gehäuse-Abschnitt 2.4 ist eine fünfte Gehäuse-Öffnung 7.5 angeordnet, durch die ein Gasaustausch zwischen dem Innenraum und dem Außenraum des Gehäuses 2 ermöglicht ist. Im vierten Gehäuse-Abschnitt 2.4 kann auch eine siebte Gehäuse-Öffnung 7.7 angeordnet sein, die jedoch in dieser Schnitt-Ansicht nicht dargestellt ist. Im fünften Gehäuse-Abschnitt 2.5 ist eine sechste Gehäuse-Öffnung 7.6 angeordnet, durch die ein Gasaustausch zwischen dem Innenraum und dem Außenraum des Gehäuses 2 ermöglicht ist. Im fünften Gehäuse-Abschnitt 2.5 kann auch eine achte Gehäuse-Öffnung 7.8 angeordnet sein, die jedoch in dieser Schnitt-Ansicht nicht dargestellt ist. Diese Ausführungsform ist besonders für Anwendungen geeignet, bei denen sich die räumliche Einbaulage des Batteriesystems 1 ändern kann. Beispielsweise kann ein Kraftfahrzeug mit einem Batteriesystem 1 nach einem Unfall auf dem Dach zu liegen kommen. Eine Ausgestaltung gemäß dieser Ausführungsform ermöglicht auch in diesem Fall ein Ableiten von ausgetretenem Wärmeträger über die dritte und vierte Schräge 6.3 zu einem oder mehreren Gehäuse-Öffnungen. Dabei kann das Gehäuse 2 aus zwei Gehäuse-Hälften bestehen, die bevorzugt Gleichteile sind. Dadurch ergibt sich ein spiegelbildlicher Aufbau der oberen und unteren Gehäuse-Hälfte.

### Bezugszeichenliste

- 1: Batteriesystem
- 2: Gehäuse
- 2.1: Erster Gehäuse-Abschnitt
- 2.2: Zweiter Gehäuse-Abschnitt
- 2.3: Dritter Gehäuse-Abschnitt
- 2.4: Vierter Gehäuse-Abschnitt
- 2.5: Fünfter Gehäuse-Abschnitt
- 2.6: Sechster Gehäuse-Abschnitt
- 3: Zellen
- 4: Kühlkörper
- 4.1: Einlass
- 4.2: Auslass
- 5: Aufnahmevorrichtung
- 6.1: Erste Schräge
- 6.2: Zweite Schräge
- 6.3: Dritte Schräge
- 6.4: Vierte Schräge
- 7.1: Erste Gehäuse-Öffnung
- 7.2: Zweite Gehäuse-Öffnung
- 7.3: Dritte Gehäuse-Öffnung
- 7.4: Vierte Gehäuse-Öffnung
- 7.5: Fünfte Gehäuse-Öffnung
- 7.6: Sechste Gehäuse-Öffnung
- 7.7: Siebte Gehäuse-Öffnung
- 7.8: Achte Gehäuse-Öffnung
- 8: Membran
- 9.1: Erste Seitenwand
- 9.2: Zweite Seitenwand
- 10: Bodenfläche
- 11: Deckfläche
- 12: Ventil
- 12.1: Schwimmkörper

## Patentansprüche

1. Batteriesystem (1), umfassend ein Gehäuse (2) mit Bodenfläche (10) und Deckfläche (11), eine Vielzahl von in einem Innenraum des Gehäuses (2) angeordneten Zellen (3), sowie eine darin angeordnete Temperiervorrichtung zum Zu- und/oder Abführen von Wärme von und/oder zu den Zellen (3) mittels eines flüssigen Wärmeträgers, wobei das Gehäuse (2) Gehäuse-Öffnungen (7.1, 7.2, 7.5, 7.6) aufweist durch die ein Gasaustausch zwischen dem Innenraum und dem Außenraum des Gehäuses (2) ermöglicht ist, und wobei das Gehäuse (2) Gehäuse-Abschnitte (2.1, 2.6) aufweist die dazu eingerichtet sind, austretenden Wärmeträger unabhängig von der Einbaulage des Batteriesystems (1) durch Schrägen (6.1, 6.2) an der Bodenfläche (10) und Schrägen (6.3, 6.4) an der Deckfläche (11) zu Gehäuse-Abschnitten (2.2, 2.3, 2.4, 2.5) zu leiten, wobei die Gehäuse-Öffnung (7.1) im Gehäuse-Abschnitt (2.2), die Gehäuse-Öffnung 7.2 im Gehäuse-Abschnitt (2.3), die Gehäuse-Öffnung 7.5 im Gehäuse-Abschnitt (2.4) und die Gehäuse-Öffnung 7.6 im Gehäuse-Abschnitt (2.5) angeordnet ist und das Gehäuse (2) aus zwei Gehäusehälften besteht, die Gleichteile sind derart, dass sich ein spiegelbildlicher Aufbau der oberen und der unteren Gehäuse-hälfte ergibt.

2. Batteriesystem (1) nach Anspruch 1,
**dadurch gekennzeichnet, dass** in einer Einbaulage des Batteriesystems (1) der tiefste Punkt des zweiten Gehäuse-Abschnitts (2.2) unterhalb des tiefsten Punkts des ersten Gehäuse-Abschnitts (2.1) angeordnet ist.

3. Batteriesystem (1) nach einem der Ansprüche 1 bis 2, wobei das Gehäuse (2) eine Bodenfläche (10) und vier von der Bodenfläche (10) emporragende Seitenwände aufweist,
**dadurch gekennzeichnet, dass** der zweite Gehäuse-Abschnitt (2.2) zwischen dem ersten Gehäuse-Abschnitt (2.1) und einer ersten Seitenwand (9.1) angeordnet ist.

4. Batteriesystem (1) nach zumindest einem der vorangehenden Ansprüche, wobei das Gehäuse (2) eine Bodenfläche (10) und vier von der Bodenfläche (10) emporragenden Seitenwände aufweist,
**dadurch gekennzeichnet, dass** der dritte Gehäuse-Abschnitt (7.3) zwischen dem ersten Gehäuse-Abschnitt (2.1) und einer zweiten Seitenwand (9.2) angeordnet ist.

5. Batteriesystem (1) nach Anspruch 4,
**dadurch gekennzeichnet, dass** die zweite Seitenwand (9.2) auf einer der ersten Seitenwand (9.1) gegenüberliegenden Seite des Gehäuses (2) angeordnet ist.

6. Batteriesystem (1) nach einem der Ansprüche 1 bis 2,
**dadurch gekennzeichnet, dass** die erste Gehäuse-Öffnung (7.1) in einer Seitenwand des Gehäuses (2) angeordnet ist.

7. Batteriesystem (1) nach Anspruch 1,
**dadurch gekennzeichnet, dass** die zweite Gehäuse-Öffnung (7.2) in einer Seitenwand des Gehäuses (2) angeordnet ist.

8. Batteriesystem (1) nach Anspruch 7,
**dadurch gekennzeichnet , dass** die erste und zweite Gehäuse-Öffnung (7.1, 7.2) in einander gegenüberliegenden Seitenwänden angeordnet sind.

9. Batteriesystem (1) nach Anspruch 1,
**dadurch gekennzeichnet , dass** der erste Gehäuse-Abschnitt (2.1) Aufnahmevorrichtungen (5) aufweist, die zur Befestigung der Temperiervorrichtung geeignet sind.

10. Batteriesystem (1) nach Anspruch 1,
**dadurch gekennzeichnet, dass** im zweiten Gehäuse-Abschnitt (2.1) eine dritte Gehäuse-Öffnung (7.3) angeordnet ist, wobei erste Gehäuse-Öffnung (7.1) und dritte Gehäuse-Öffnung (7.3) an gegenüberliegenden Enden des Gehäuses (2) angeordnet sind.

11. Batteriesystem (1) nach Anspruch 1,
**dadurch gekennzeichnet, dass** im dritten Gehäuse-Abschnitt (2.3) eine vierte Gehäuse-Öffnung (7.4) angeordnet ist, wobei zweite Gehäuse-Öffnung (7.2) und vierte Gehäuse-Öffnung (7.4) an gegenüberliegenden Enden des Gehäuses (2) angeordnet sind.

12. Batteriesystem (1) nach zumindest einem der vorgehenden Ansprüche,
**dadurch gekennzeichnet, dass** in zumindest einer der Gehäuse-Öffnungen (7.1, 7.2, 7.3, 7.4) eine Membran (8) angeordnet ist, wobei die Membran (8) für flüssigen Wärmeträger durchlässig ist.

13. Batteriesystem (1) zumindest einem der vorgehenden Ansprüche,
**dadurch gekennzeichnet, dass** in zumindest einer der Gehäuse-Öffnungen (7.1, 7.2, 7.3, 7.4) ein Ventil (12) angeordnet ist, wobei das Ventil (12) einen Schwimmkörper (12.1) aufweist und eingerichtet ist, bei Beaufschlagung mit flüssigem Wärmeträger von einer Sperr-Stellung in eine Offen-Stellung zu wechseln.

## Claims

1. Battery system (1) comprising a housing (2) having a bottom surface (10) and a top surface (11), a plurality of cells (3) arranged in an interior space of the housing (2), and a temperature control device arranged therein for supplying heat to the cells (3) and/or carrying heat away therefrom by means of a liquid heat transfer medium, wherein the housing (2) comprises housing openings (7.1, 7.2, 7.5, 7.6), which enable gas exchange between the interior space and the exterior of the housing (2), and wherein the housing (2) comprises housing portions (2.1, 2.6), which are configured to conduct exiting heat transfer medium to housing portions (2.2, 2.3, 2.4, 2.5) by means of slopes (6.1, 6.2) on the bottom surface (10) and slopes (6.3, 6.4) on the top surface (11), regardless of the installation position of the battery system (1), wherein the housing opening (7.1) is arranged in the housing portion (2.2), the housing opening (7.2) is arranged in the housing portion (2.3), the housing opening (7.5) is arranged in the housing portion (2.4) and the housing opening (7.6) is arranged in the housing portion (2.5), and the housing (2) consists of two housing halves, which are identical parts such that the construction of the upper and lower housing halves is a mirror image.

2. Battery system (1) according to claim 1,
**characterised in that**, in one installation position of the battery system (1), the lowest point of the second housing portion (2.2) is arranged beneath the lowest point of the first housing portion (2.1).

3. Battery system (1) according to any of claims 1 to 2, wherein the housing (2) comprises a bottom surface (10) and four side walls rising from the bottom surface (10), **characterised in that** the second housing portion (2.2) is arranged between the first housing portion (2.1) and a first side wall (9.1).

4. Battery system (1) according to at least one of the preceding claims, wherein the housing (2) comprises a bottom surface (10) and four side walls rising from the bottom surface (10),
**characterised in that** the third housing portion (7.3) is arranged between the first housing portion (2.1) and a second side wall (9.2).

5. Battery system (1) according to claim 4,
**characterised in that** the second side wall (9.2) is arranged on a side of the housing (2) opposite the first side wall (9.1).

6. Battery system (1) according to any of claims 1 to 2,
**characterised in that** the first housing opening (7.1) is arranged in a side wall of the housing (2).

7. Battery system (1) according to claim 1,
**characterised in that** the second housing opening (7.2) is arranged in a side wall of the housing (2).

8. Battery system (1) according to claim 7,
**characterised in that** the first and second housing openings (7.1, 7.2) are arranged in opposite side walls.

9. Battery system (1) according to claim 1,
**characterised in that** the first housing portion (2.1) comprises holders (5) capable of securing the temperature control device.

10. Battery system (1) according to claim 1,
**characterised in that** a third housing opening (7.3) is arranged in the second housing portion (2.1), wherein the first housing opening (7.1) and the third housing opening (7.3) are arranged at opposite ends of the housing (2).

11. Battery system (1) according to claim 1,
**characterised in that** a fourth housing opening (7.4) is arranged in the third housing portion (2.3), wherein the second housing opening (7.2) and the fourth housing opening (7.4) are arranged at opposite ends of the housing (2).

12. Battery system (1) according to at least one of the preceding claims,
**characterised in that** a membrane (8) is arranged in at least one of the housing openings (7.1, 7.2, 7.3, 7.4), wherein the membrane (8) is permeable to liquid heat exchange media.

13. Battery system (1) according to at least one of the preceding claims,
**characterised in that** a valve (12) is arranged in at least one of the housing openings (7.1, 7.2, 7.3, 7.4), wherein the valve (12) comprises a float (12.1) and is configured to switch from a blocking position into an open position when pressure from a liquid heat exchange medium is applied thereto.

## Revendications

1. Système de batterie (1), comprenant un boîtier (2) pourvu d'une surface de fond (10) et d'une surface de recouvrement (11), une pluralité d'éléments (3) agencés dans un espace intérieur du boîtier (2), ainsi qu'un dispositif de thermorégulation agencé dans celui-ci et destiné à amener de la chaleur aux éléments (3) et/ou à l'évacuer de ceux-ci au moyen d'un agent caloporteur liquide, dans lequel le boîtier (2) présente des ouvertures de boîtier (7.1, 7.2, 7.5, 7.6) par lesquelles un échange de gaz entre l'espace intérieur et l'espace extérieur du boîtier (2) est permis, et dans lequel le boîtier (2) présente des parties de boîtier (2.1, 2.6) qui sont conçues pour acheminer l'agent caloporteur sortant aux parties de boîtier (2.2, 2.3, 2.4, 2.5) par l'intermédiaire de chanfreins (6.1, 6.2) sur la surface de fond (10) et de chanfreins (6.3, 6.4) sur la surface de recouvrement (11), indépendamment de la position de montage du système de batterie (1), dans lequel l'ouverture de boîtier (7.1) est ménagée dans la partie de boîtier (2.2), l'ouverture de boîtier (7.2) dans la partie de boîtier (2.3), l'ouverture de boîtier (7.5) dans la partie de boîtier (2.4) et l'ouverture de boîtier (7.6) dans la partie de boîtier (2.5) et le boîtier (2) est constitué de deux moitiés de boîtier qui sont des pièces identiques, de telle sorte qu'on obtient une structure à symétrie spéculaire de la moitié supérieure et de la moitié inférieure du boîtier.

2. Système de batterie (1) selon la revendication 1,
**caractérisé en ce que**, dans une position de montage du système de batterie (1), le point le plus bas de la deuxième partie de boîtier (2.2) est situé au-dessous du point le plus bas de la première partie de boîtier (2.1).

3. Système de batterie (1) selon l'une quelconque des revendications 1 à 2, dans lequel le boîtier (2) présente une surface de fond (10) et quatre parois latérales faisant saillie de la surface de fond (10),
**caractérisé en ce que** la deuxième partie de boîtier (2.2) est agencée entre la première partie de boîtier (2.1) et une première paroi latérale (9.1).

4. Système de batterie (1) selon au moins l'une des revendications précédentes, dans lequel le boîtier (2) présente une surface de fond (10) et quatre parois latérales faisant saillie de la surface de fond (10),
**caractérisé en ce que** la troisième partie de boîtier (7.3) est agencée entre la première partie de boîtier (2.1) et une deuxième paroi latérale (9.2).

5. Système de batterie (1) selon la revendication 4,
**caractérisé en ce que** la deuxième paroi latérale (9.2) est agencée sur une face du boîtier (2) opposée à la première paroi latérale (9.1).

6. Système de batterie (1) selon l'une quelconque des revendications 1 à 2,
**caractérisé en ce que** la première ouverture de boîtier (7.1) est ménagée dans une paroi latérale du boîtier (2).

7. Système de batterie (1) selon la revendication 1,
**caractérisé en ce que** la deuxième ouverture de boîtier (7.2) est ménagée dans une paroi latérale du boîtier (2).

8. Système de batterie (1) selon la revendication 7,
**caractérisé en ce que** la première et la deuxième ouverture de boîtier (7.1, 7.2) sont ménagées dans des parois latérales opposées l'une à l'autre.

9. Système de batterie (1) selon la revendication 1,
**caractérisé en ce que** la première partie de boîtier (2.1) présente des dispositifs de logement (5) qui sont adaptés à la fixation du dispositif de thermorégulation.

10. Système de batterie (1) selon la revendication 1,
**caractérisé en ce qu'**une troisième ouverture de boîtier (7.3) est ménagée dans la deuxième partie de boîtier (2.1), dans lequel la première ouverture de boîtier (7.1) et la troisième ouverture de boîtier (7.3) sont ménagées aux extrémités opposées du boîtier (2).

11. Système de batterie (1) selon la revendication 1,
**caractérisé en ce qu'**une quatrième ouverture de boîtier (7.4) est ménagée dans la troisième partie de boîtier (2.3), dans lequel la deuxième ouverture de boîtier (7.2) et la quatrième ouverture de boîtier (7.4) sont ménagées aux extrémités opposées du boîtier (2).

12. Système de batterie (1) selon au moins l'une des revendications précédentes,
**caractérisé en ce qu'**une membrane (8) est agencée dans au moins une des ouvertures de boîtier (7.1, 7.2, 7.3, 7.4), dans lequel la membrane (8) est perméable à l'agent caloporteur liquide.

13. Système de batterie (1) selon au moins l'une des revendications précédentes,
**caractérisé en ce qu'**une soupape (12) est agencée dans au moins une des ouvertures de boîtier (7.1, 7.2, 7.3, 7.4), dans lequel la soupape (12) comprend un corps flottant (12.1) et est conçue pour passer d'une position de blocage à une position d'ouverture lorsqu'elle est soumise à l'action de l'agent caloporteur liquide.
